# EUROPÄISCHE PATENTSCHRIFT

(11) **EP 1 472 070 B1**
(45) Veröffentlichungstag und Bekanntmachung des Hinweises auf die Patenterteilung: **16.12.2009**
(21) Anmeldenummer: 03706101.7
(22) Anmeldetag: 30.01.2003
(51) Int. Cl.: B29C 47/02, H01B 13/00, H01B 13/14

(54) **VERFAHREN UND VORRICHTUNG ZUM NACHFÜHREN EINER FASER IN EINEN SPRITZKOPF**
METHOD AND DEVICE FOR TRACKING A FIBER INTO AN INJECTION HEAD
PROCEDE ET UN DISPOSITIF POUR INTRODUIRE UNE FIBRE DANS UNE TETE D'INJECTION

(30) Priorität: 06.02.2002 AT 1962002
(43) Veröffentlichungstag der Anmeldung: 03.11.2004
(73) Patentinhaber: Rosendahl Maschinen GmbH, 8212 Pischelsdorf (AT)
(72) Erfinder: HÖRSCHLÄGER, Werner, A-8054 Pirka (AT)
(74) Vertreter: Hehenberger, Reinhard
(86) Internationale Anmeldenummer: PCT/AT2003/000029
(87) Internationale Veröffentlichungsnummer: WO 2003/066312

(56) Entgegenhaltungen:
- EP-A- 0 675 577
- US-A- 4 137 622
- US-A- 4 378 267
- PATENT ABSTRACTS OF JAPAN vol. 009, no. 107 (M-378), 11. Mai 1985 (1985-05-11) & JP 59 229250 A (YAZAKI SOUGIYOU KK), 22. Dezember 1984 (1984-12-22)

## Beschreibung

Die Erfindung betrifft ein Verfahren zum Nachführen einer neuen Faser oder dergleichen in einen Spritzkopf zum Beschichten oder Umhüllen der Faser, wenn eine gerade im Spritzkopf befindliche erste Faser zu Ende geht, sowie eine Vorrichtung zum Ein- oder Nachführen einer neuen Faser oder dergleichen in einen Spritzkopf zum Beschichten oder Umhüllen der Faser, mit einer Zuführeinrichtung für die Faser in den Spritzkopf.

Die Erfindung bezieht sich auf das Zu- bzw. Nachführen von Fasern oder Adern in einen Spritzkopf wobei die Erfindung nicht nur bei einzelnen Fasern oder Adern, sondern auch bei einer oder mehreren Fasern mit Secondary Coating, mehreren losen Fasern, Faserbündeln, verseilten Fasern sowie mehreren Strängen aus Faserbündeln oder verseilten Fasern bzw. Adern angewendet werden kann. Des weiteren können die Fasern oder Adern aus den unterschiedlichsten Materialen, beispielsweise Glas oder Kunststoff für Lichtwellenleiter oder Kupfer für elektrische Leitungen hergestellt sein. Sofern im Folgenden auf Fasern Bezug genommen wird, sind alle vorgenannten Produkte gemeint.

Zum Beschichten bzw. Umhüllen von Fasern werden diese durch einen Spritzkopf geführt, in welchem die Beschichtung bzw. Umhüllung auf die Fasern aufgebracht wird. Da die Fasern nur in endlicher Länge auf Rollen oder dergleichen zur Verfügung gestellt und in den Spritzkopf geführt werden können, besteht am Ende einer Faser die Notwendigkeit, entweder den Prozess des Umhüllens bzw. Beschichtens zu unterbrechen, eine neue Faser in den Spritzkopf einzuführen und den Prozess dann wieder anzufahren oder in Kauf zu nehmen, dass bei ununterbrochenem Prozess des Umhüllens bzw. Beschichtens eine relativ lange Strecke als Ausschuß entsteht, bis nach dem Ende einer ersten Faser eine zweiter Faser wieder in den Spritzkopf eingeführt wird.

Der Erfindung liegt daher die Aufgabe zu Grunde; ein Verfahren und eine Vorrichtung zur Verfügung zu stellen, durch welche die Zeit zum Nachsetzen einer neuen Faser nach dem Ende einer vorhergehenden Faser verkürzt wird.

Gelöst wird diese Aufgabe mit einem Verfahren mit den Merkmalen des Anspruches 1.

Diese Aufgabe wird des weiteren mit einer Vorrichtung mit den Merkmalen des Anspruches 10 gelöst.

Die Erfindung beruht im wesentlichen darauf, dass während noch eine erste Faser durch den Spritzkopf läuft, bereits eine neue Faser in einer Zuführeinrichtung, die neben der ersten bzw. alten Faser positioniert ist, bereitgestellt wird. Dadurch dass die zweite Faser unmittelbar vor bzw. neben dem Spritzkopf bereitgestellt wird, kann der Wechsel von der ersten zur zweiten Faser sehr rasch durchgeführt werden, wodurch bei einem ununterbrochenen Prozess der Materialverlust bzw. Ausschuss im Wechselbereich von der ersten zur zweiten Faser relativ gering gehalten werden kann.

Wenn in einer bevorzugten Ausführungsform der Erfindung zwei, vorzugsweise identische, Zuführeinrichtungen vorgesehen sind, nämlich eine erste, die der aktuell durch den Spritzkopf laufenden Faser zugeordnet ist und eine zweite, die der bereitgestellten Faser zugeordnet ist, dann wird, sobald das Ende der ersten Faser erreicht wird, die erste Zuführeinrichtung aus dem Bereich vor dem Spritzkopf wegbewegt und die zweite Zuführeinrichtung gleichzeitig vor dem Spritzkopf positioniert, worauf die zweite bereitgestellte Faser sofort in den Spritzkopf eingeführt und beschleunigt wird, bis die vorgesehene Bearbeitungs- bzw. Liniengeschwindigkeit der Faser wieder erreicht ist.

Idealerweise werden die erste und die zweite Zuführeinrichtung gleichzeitig bewegt. Dies erfolgt bevorzugt dadurch, dass beide Zuführeinrichtungen auf einem Rahmen montiert sind, der vom Antrieb im rechten Winkel bzw. quer zur Einführrichtung der Faser in den Spritzkopf verschiebbar bzw. einschwenkbar ist.

Grundsätzlich würde ein einziger Faserabzug reichen, um die Faser vom Faserspeicher abzuziehen und in den Spritzkopf zu fördern. Bevorzugt ist im Rahmen der Erfindung allerdings, wenn die neue Faser von einem zweiten, vor dem Spritzkopf angeordneten Faserabzug beschleunigt wird und dass die Fördergeschwindigkeit eines ersten, in Bewegungsrichtung der Faser vor dem zweiten Faserabzug angeordneten Faserabzuges in Abhängigkeit von der Länge der Faser, die in einem zwischen dem ersten und dem zweiten Faserabzug angeordneten Faserspeicher vorhanden ist, gesteuert wird. Auf diese Weise kann die Beschleunigung der Faser beim Einführen der Faser bzw. Nachführen einer neuen Faser in den Spritzkopf optimal, d.h. in sehr kurzer Zeit, durchgeführt werden.

Weitere bevorzugte Ausführungsformen bzw. Durchführungsformen der Erfindung sind Gegenstand der übrigen Unteransprüche.

Nachfolgend wird mit Bezugnahme auf die beiliegenden Zeichnungen ein bevorzugtes Ausführungsbeispiel der Erfindung beschrieben.

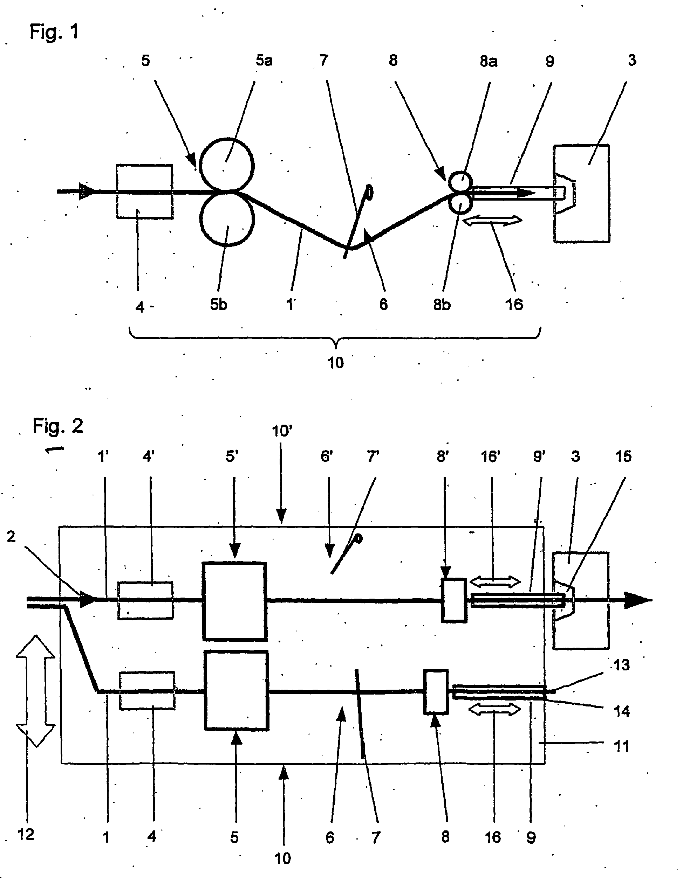

Es zeigt Fig. 1 eine Seitenansicht auf eine schematisierte Darstellung einer Ausführungsform der Erfindung und Fig. 2 eine Draufsicht auf die Vorrichtung wie sie in Fig. 1 dargestellt ist.

In Fig. 1 und 2 ist stellvertretend für alle möglichen Fasern, Adern oder Faser- bzw. Aderbündel, wie sie eingangs erwähnt wurden, eine einzelne Faser 1 dargestellt, die von einem in der Zeichnung nicht dargestellten Faserspeicher, beispielsweise einer Trommel, kommend in Richtung des Pfeils 2 zu einem Spritzkopf 3 geführt wird, in dem die Faser beschichtet oder umhüllt wird, was im Stand der Technik hinlänglich bekannt ist, so dass der Spritzkopf 3 nicht näher beschrieben wird.

Die Faser 1 wird in Bewegungsrichtung 2 vom Faserspeicher kommend durch eine Vorbenetzungseinheit 4, einen ersten Faserabzug 5, einen Faserspeicher 6 mit einem Drahtbügeltänzer 7, einen zweiten Faserabzug 8 und ein Führungsrohr 9 in den Spritzkopf 3 geführt. Die Vorbenetzungseinheit muss nicht vorgesehen sein oder kann auch an anderer Stelle, beispielsweise zwischen dem ersten Faserabzug 5 und dem Tänzer 7 oder dem Tänzer 7 und dem zweiten Faserabzug 8 angeordnet sein.

Bei Normalbetrieb, d.h. wenn die Faser 1 mit der normalen Betriebs- bzw. Liniengeschwindigkeit durch den Spritzkopf 3 geführt wird, sind die Rollen 5a, 5b des Faserabzugs 5 und die Rollen 8a, 8b des Faserabzugs 8 geöffnet und der Drahtbügeltänzer 7 ist aus seinem Kontakt bzw. Wirkungsbereich mit der Faser 1 geschwenkt, so dass sich die Faser 1 frei durch die Zuführeinheit 10 bewegt.

Die Faserabzüge 5 und 8 und der Faserspeicher 6 sind üblicherweise nur dann geschlossen bzw. aktiv, wenn eine neue Faser 1 in den Spritzkopf eingeführt bzw. nachgeführt wird, um die Faser 1 bis zur Betrieb- bzw. Liniengeschwindigkeit zu beschleunigen. Es ist aber auch ein Betriebsmodus denkbar, bei dem der Faserabzug 5 immer geschlossen bzw. aktiv ist.

Um das Einführen einer neuen Faser 1 in den Spritzkopf 3 bzw. das Nachführen einer neuen Faser 1, wenn eine vorgehende Faser 1 endet, in den Spritzkopf 3 in möglichst kurzer Zeit durchführen zu können, sind, wie in Fig. 2 dargestellt ist, zwei im wesentlichen identisch aufgebaute Zuführeinrichtungen 10, 10' nebeneinander oder übereinander auf einer Montageplatte oder einen Montagerahmen 11 befestigt. Der Montagerahmen 11 ist quer zur Bewegungsrichtung der Faser 1 verschiebbar, wie durch den Doppelpfeil 12 angedeutet ist, um einmal die erste Zuführeinrichtung 10 und ein andermal die zweite Zuführeinrichtung 10' vor dem Spritzkopf 3 positionieren zu können.

Im in Fig. 2 dargestellten Ausführungsbeispiel wird gerade eine Faser 1' mit normaler Betriebsgeschwindigkeit bearbeitet, so dass wie erwähnt die Faserabzüge 5' und 8' sowie der Faserspeicher 6' deaktiviert sind. Die neben der Zuführeinrichtung 10' auf den Montagerahmen 11 befestigte Zuführeinrichtung 10 befindet sich in Warteposition in der in Fig. 1 dargestellten Situation, in der eine Faser 1 zum Zuführen in den Spritzkopf 3 vorbereitet ist, das heißt, dass der Beginn 13 der Faser 1 an der Mündung 14 des Führungsrohres 9 positioniert ist.

Unmittelbar nach dem das Ende der Faser 1' durch das Führungsrohr 9' in den Spritzkopf 3 eingelaufen ist, wird das Führungsrohr 9' mit dem Faserabzug 8' zurückgezogen und der Montagerahmen 11 verschoben (in Fig. 2 in der Bildebene nach oben), so dass dann die Zuführeinrichtung 10 mit dem Führungsrohr 9 vor dem Spritzkopf 3 positioniert ist, worauf das Führungsrohr 9 eine kurze Strecke in Bewegungsrichtung der Faser 1 nach vorne und in den Einlaufbereich 15 des Spritzkopfes 3 bewegt wird. Die Führungsrohre 9, 9' können auch in Längsrichtung geteilt ausgeführt sein. Im wesentlichen gleichzeitig beginnen die Faserabzüge 5 und 8 zu arbeiten, so dass die neue Faser 1 mit ihrem Anfang 13 in den Spritzkopf 3 eingeführt wird. Die Synchronisation der Faserabzüge 5 und 8 erfolgt derart, dass zunächst der Faserabzug 8 die Geschwindigkeit bzw. Beschleunigung der Faser 1 vorgibt und der Faserabzug 5 mit Hilfe des Drahtbügeltänzers 7 derart geregelt wird, dass immer ausreichend Faser 1 im Faserspeicher 6 vorhanden ist.

Mit zunehmender Länge wird die beschichtete bzw. umhüllte Faser immer stärker von einem nach dem Spritzkopf 3 angeordneten Abzug (in den Zeichnungen nicht dargestellt) über das Umhüllungsmaterial, beispielsweise ein die Faser umhüllendes Röhrchen, mitgezogen, worauf der Freilauf am Faserabzug 8 aktiv wird. Der Drahtbügeltänzer 7 bewirkt nun, dass der Faserabzug 5 weiter beschleunigt.

Wenn die Fasergeschwindigkeit einen bestimmten Prozentsatz (z.B. 90%) der normalen Linien- bzw. Betriebsgeschwindigkeit erreicht hat, werden die Rollen 5a, 5b und 8a, 8b der beiden Abzüge 5 und 8 auseinander bewegt und der Drahtbügeltänzer 7 aus seinem Wirkungsbereich nach oben geschwenkt und dort arretiert. Das Führungsrohr 9 kann auch bereits in diesem Stadium aus dem Spritzkopf 3 gezogen und geöffnet werden, so dass die neu eingeführte Faser 1 nun vollkommen frei läuft.

In diesem Zustand kann bereits eine neue Faser in die nun freie Zuführeinrichtung 10' eingelegt werden.

Sofern eine Bewegung des Führungsrohres 9, 9' in Bewegungsrichtung der Faser 1, 1' in bzw. aus dem Spritzkopf 3 in Richtung des Doppelpfeils 16, 16' durchgeführt werden soll (unter Umständen kann darauf auch verzichtet werden), ist es möglich nicht nur das Führungsrohr 9, 9' gegebenenfalls gemeinsam mit dem Faserabzug 8, 8' relativ zum Montagerahmen 11 zu bewegen, sondern es ist auch möglich das Führungsrohr 9, 9' auf dem Montagerahmen 11 fest zu montieren und vom Montagerahmen 11 nicht nur die Bewegung in Richtung des Pfeils 12 sondern auch in Richtung der Faserbewegung, also der Pfeile 16, 16' auszuführen.

Es ist bei geeigneter Regelung und Beschleunigung der Zufuhr der Faser 1, 1' zur Zuführeinrichtung 10, 10' auch möglich, auf den Faserabzug 5 mit dem Faserspeicher 6 zu verzichten und nur den Faserabzug 8, 8' zu verwenden.

Grundsätzlich ist es auch denkbar, die erste Zuführeinrichtung 10' und die zweite Zuführeinrichtung 10 nicht auf einer gemeinsamen Montageplatte 11 zu befestigen, sondern zwei Montageplatten vorzusehen, wobei jede Montageplatte mit einem eigenen Antrieb ausgestattet und unabhängig von der anderen Montageplatte bewegbar ist.

Gemäß einer in den Zeichnungen nicht dargestellten Ausführungsform der Erfindung ist lediglich eine einzige Zuführeinrichtung 10' vorgesehen, die wiederum aus einem ersten Faserabzug 5', einem Faserspeicher 6', einem zweiten Faserabzug 8' sowie einem Führungsrohr 9' bestehen kann. Eine Benetzungseinheit 4' müßte dann, soweit überhaupt eine erforderlich ist, an einer anderen Stelle angeordnet sein.

Da, wie erwähnt, die Zuführeinrichtung bei laufendem Betrieb ohnedies deaktiviert sein kann, kann sie von der aktuellen Faser seitlich oder nach oben oder unten weg bewegt werden, so dass sie dann die Position einnehmen kann, die in Fig. 2 von der Zuführeinrichtung 10 eingenommen wird. Im Bereich der aktuellen bzw. ersten Faser 1' würde sich dann keine Zuführeinrichtung befinden. In der neben der Faser 1' angeordneten Zuführeinrichtung 10' kann dann wiederum eine neue bzw. zweite Faser 1 eingeführt und vorbereitet werden und die Zuführeinrichtung 10' würde dann, wenn die erste Faser 1' zu Ende geht, wieder in den Zuführbereich vor dem Spritzkopf 3 bewegt werden, worauf die vorbereitete Faser 1 in den Spritzkopf eingeführt werden kann. Nach vollendetem Einführen bzw. Beschleunigen der neuen Faser auf Betriebsgeschwindigkeit kann die Zuführeinrichtung 10' dann wieder aus dem Bereich der Faser 1' wegbewegt werden. Auf diese Weise ist ein erfindungsgemäßer Betrieb der erfindungsgemäßen Vorrichtung auch dann möglich, wenn nur eine einzige Zuführeinrichtung 10' vorgesehen ist.

Die Erfindung kann natürlich nicht nur zum Nachführen einer Faser verwendet werden, wenn im laufenden Betrieb eine Faser zu Ende geht, sondern auch zum erstmaligen Einführen einer Faser bei Betriebsbeginn.

Zusammenfassend kann ein bevorzugtes Ausführungsbeispiel der Erfindung wie folgt beschrieben werden:
Um das Zuführen einer neuen Faser 1 oder dergleichen in einen Spritzkopf 3 in möglichst kurzer Zeit nach dem Ende einer gerade durch den Spritzkopf 3 laufenden ersten Faser 1' durchzuführen, werden ein Verfahren und eine Vorrichtung vorgeschlagen, bei denen die neue Faser 1 unmittelbar vor bzw. neben dem Spritzkopf 3 in einer Zuführeinrichtung 10 bereit gestellt wird. Sobald die erste Faser 1' zu Ende gegangen ist, wird diese Zuführeinrichtung 10 in den Bereich vor den Spritzkopf 3 bewegt und die neue Faser 1 beschleunigt und in den Spritzkopf 3 eingeführt.

## Patentansprüche

1. Verfahren zum Nachrühren einer neuen Faser (1) oder dergleichen in einen Spritzkopf (3) zum Beschichten oder Umhüllen der Faser (1), wenn eine gerade im Spritzkopf (3) befindliche erste Faser (1') zu Ende geht, **dadurch gekennzeichnet, daß** die neue Faser (1) in einer Zuführeinrichtung (10), die neben der ersten Faser angeordnet ist, bereitgestellt wird, daß die Zuführeinrichtung (10) nach dem Ende der ersten Faser (1') vor dem Spritzkopf (3) positioniert wird, und daß die neue Faser (1) in den Spritzkopf (3) eingeführt und beschleunigt wird.

2. Verfahren nach Anspruch 1, **dadurch gekennzeichnet, daß** die erste Faser (1') durch eine erste Zuführeinrichtung (10') in den spritzkopf (3) geführt wird, und daß die erste Zuführeinrichtung (10') nach dem Ende der ersten Faser (1') vom spritzkopf (3) wegbewegt wird, bevor oder während die zweite Zuführeinrichtung (10) für die neue Faser (1) vor dem Spritzkopf (3) positioniert wird.

3. Verfahren nach Anspruch 1 oder 2, **dadurch gekennzeichnet, daß** die Bewegung der Zuführeinrichtung(en) (10, 10') etwa im rechten Winkel zur Bewegungsrichtung der Faser (1, 1') erfolgt.

4. Verfahren nach Anspruch 2 oder 3, **dadurch gekennzeichnet, daß** die erste und zweite Zuführeinrichtung (10, 10') gleichzeitig bewegt werden.

5. Verfahren nach einem der Ansprüche 1 bis 3, **dadurch gekennzeichnet, daß** die neue Faser (1) von einem zweiten, vor dem Spritzkopf (3) angeordneten Faserabzug (8) beschleunigt wird und daß die Fördergeschwindigkeit eines ersten, in Bewegungsrichtung der Faser (1) vor dem zweiten Faserabzug (8) angeordneten Faserabzuges (5) in Abhängigkeit von der Länge der Faser (1), die in einem zwischen dem ersten (5) und dem zweiten (8) Faserabzug angeordneten Faserspeichers (6) vorhanden ist, gesteuert wird.

6. Verfahren nach Anspruch 5, **dadurch gekennzeichnet, daß** der zweite Faserabzug (8) nach Erreichen einer ersten vorgegebenen Geschwindigkeit der Faser (1) deaktiviert wird.

7. Verfahren nach Anspruch 6, **dadurch gekennzeichnet, daß** der erste Faserabzug (5) nach Erreichen einer zweiten vorgegebenen Geschwindigkeit der Faser (1) deaktiviert wird.

8. Verfahren nach Anspruch 5, **dadurch gekennzeichnet, daß** der erste und zweite Faserabzug (5, 8) nach Erreichen einer vorgegebenen Geschwindigkeit der Faser (1) gleichzeitig deaktiviert werden.

9. Verfahren nach Anspruch 7 oder 8, **dadurch gekennzeichnet, daß** der Faserspeicher (6) gleichzeitig mit dem Deaktivieren des ersten Faserabzuges (5) deaktiviert wird.

10. Vorrichtung zum Ein- oder Nachführen einer neuen Faser (1) oder dergleichen in einen Spritzkopf (3) zum Beschichten oder Umhüllen der Faser (1), mit einer Zuführeinrichtung (10, 10') für die Faser (1) in den Spritzkopf (3), **dadurch gekennzeichnet, daß** die Zuführeinrichtung (10') neben der gerade in den Spritzkopf (3) einlaufenden ersten Faser (1) positionierbar ist und daß ein Antrieb vorgesehen ist, mit dem die Zuführeinrichtung (10, 10') vor dem Spritzkopf (3) positionierbar ist.

11. Vorrichtung nach Anspruch 10, **dadurch gekennzeichnet, daß** eine erster Zuführeinrichtung (10) für die erste Faser und eine zweite Zuführeinrichtung (10') für eine neue Faser (1) vorgesehen sind, und daß die zweite Zuführeinrichtung (10') neben der ersten Zuführeinrichtung (10) angeordnet ist.

12. Vorrichtung nach Anspruch 11, **dadurch gekennzeichnet, daß** jede Zuführeinrichtung (10, 10') einen eigenen Antrieb aufweist.

13. Vorrichtung nach Anspruch 11, **dadurch gekennzeichnet, daß** beide Zuführeinrichtungen (10, 10') einen gemeinsamen Antrieb aufweisen.

14. Vorrichtung nach Anspruch 12 oder 13, **dadurch gekennzeichnet, daß** beide Zufühieinrichtungen (10, 10') auf einem Rahmen (11) montiert sind, der vom Antrieb im rechten Winkel zur Einführrichtung der Faser (1, 1') in den Spritzkopf (3) verschiebbar ist.

15. Vorrichtung nach einem der Ansprüche 10 bis 14, **dadurch gekennzeichnet, daß** die Zuführeinrichtung(en) (10, 10') einen ersten (5, 5') und einen zweiten (8, 8') Faserabzug und einen dazwischen angeordneten Faserspeicher (6, 6') aufweist (aufweisen).

16. Vorrichtung nach einem der Ansprüche 10 bis 15, **dadurch gekennzeichnet, daß** die Zuftihreinrichtung(en) (10, 10') auslaufseitig ein Führungsrohr (9, 9') aufweist (aufweise), das vor einem Einlauf (15) des Spritzkopfes (3) positionierbar ist.

17. Vorrichtung nach Anspruch 16, **dadurch gekennzeichnet, daß** das Führungsrohr (9, 9') in Einführrichtung der Faser (1, 1') in den Spritzkopf (3) verschiebbar ist.

## Claims

1. Process for guiding a new fiber (1) or the like into an extrusion head (3) for coating or cladding of the fiber (1), when a first fiber (1') which is already in the extrusion head (3) is reaching the end, **characterized in that** the new fiber (1) is made available in a feed means (10) which is located next to the first fiber, that the feed means (10) after the end of the first fiber (1') is positioned in front of the extrusion head (3), and that the new fiber (1) is inserted into the extrusion head (3) and accelerated.

2. Process as claimed in claim 1, **characterized in that** the first fiber (1') is guided by a first feed means (10') into the extrusion head (3), and **in that** the first feed means (10') after the end of the first fiber (1') is moved away from the extrusion head (3) before or while the second feed means (10) for the new fiber (1) is positioned in front of the extrusion head (3).

3. Process as claimed in claim 1 or 2, **characterized in that** the motion of the feed means (10, 10') takes place roughly at a right angle to the direction of motion of the fiber (1, 1').

4. Process as claimed in claim 2 or 3, **characterized in that** the first and the second feed means (10, 10') are moved at the same time.

5. Process as claimed in one of the claims 1 to 3, **characterized in that** the new fiber (1) is accelerated by a second fiber draw-off (8) which is located into front of the extrusion head (3) and **in that** the delivery speed of a first fiber draw-off (5) which is located in the direction of motion of the fiber (1) in front of the second fiber draw-off (8) is controlled depending on the length of the fiber (1) which is present in a fiber magazine (6) which is located between the first (5) and the second (8) fiber draw-off.

6. Process as claimed in claim 5, **characterized in that** the second fiber draw-off (8) is deactivated after reaching a first given speed of the fiber (1).

7. Process as claimed in claim 6, **characterized in that** the first fiber draw-off (5) is deactivated after reaching a second given speed of the fiber (1).

8. Process as claimed in claim 5, **characterized in that** the first and the second fiber draw-off (5, 8) are deactivated at the same time after reaching a given speed of the fiber (1).

9. Process as claimed in claim 7 or 8, **characterized in that** the fiber magazine (6) is deactivated at the same time with deactivation of the first fiber draw-off (5).

10. Device for insertion or guidance of a new fiber (1) or the like into an extrusion head (3) for coating or cladding the fiber (1), with a feed means (10, 10') for the fiber (1) into the extrusion head (3), **characterized in that** the feed means (10') can be positioned next to the first fiber (1) which is already running into the extrusion head (3) and **in that** there is a drive with which the feed means (10, 10') can be positioned in front of the extrusion head (3).

11. Device as claimed in claim 10, **characterized in that** there are a first feed means (10) for the first fiber and a second feed means (10') for the new fiber (1), and **in that** the second feed means (10') is located next to the first feed means (10).

12. Device as claimed in claim 11, **characterized in that** each feed means (10, 10') has its own drive.

13. Device as claimed in claim 11, **characterized in that** the two feed means (10, 10') have a common drive.

14. Device as claimed in claim 12 or 13, **characterized in that** the two feed means (10, 10') are mounted on a frame (11) which can be moved by the drive at a right angle to the insertion direction of the fiber (1, 1') into the extrusion head (3).

15. Device as claimed in one of the claims 10 to 14, **characterized in that** the feed means (10,10') has (have) a first (5, 5') and a second (8, 8') fiber draw-off and a fiber magazine (6, 6') which is located in between.

16. Device as claimed in one of the claims 10 to 15, **characterized in that** the feed means (10,10') has (have) on the outlet side a guide tube (9, 9') which can be positioned in front of the inlet (15) of the extrusion head (3).

17. Device as claimed in claim 16, **characterized in that** the guide tube (9, 9') can be moved in the insertion direction of the fiber (1, 1') into the extrusion head (3).

## Revendications

1. Procédé de réacheminement d'une nouvelle fibre (1) ou similaire dans une tête d'injection (3) servant à revêtir ou enrober la fibre (1) lorsqu'une première fibre (1') se trouvant justement dans la tête d'injection (3) arrive à sa fin, **caractérisé en ce que** la nouvelle fibre (1) est mise à disposition dans un dispositif d'acheminement (10) qui est disposé près de la première fibre, que le dispositif d'acheminement (10) est positionné après le bout de la première fibre (1') avant la tête d'injection (3) et que la nouvelle fibre (1) est introduite dans la tête d'injection (3) et accélérée.

2. Procédé selon la revendication 1, **caractérisé en ce que** la première fibre (1') est conduite par un premier dispositif d'acheminement (10') dans la tête d'injection (3) et que le premier dispositif d'acheminement (10') est éloigné de la tête d'injection (3) après le bout de la première fibre (1') avant ou pendant que le deuxième dispositif d'acheminement (10) pour la nouvelle fibre (1) est positionné avant la tête d'injection (3).

3. Procédé selon la revendication 1 ou 2, **caractérisé en ce que** le mouvement du(des) dispositif(s) d'acheminement (10, 10') a lieu approximativement en angle droit par rapport au sens de mouvement des fibres (1, 1').

4. Procédé selon la revendication 2 ou 3, **caractérisé en ce que** les premier et deuxième dispositifs d'acheminement (10, 10') se déplacent en même temps.

5. Procédé selon une des revendications 1 à 3, **caractérisé en ce que** la nouvelle fibre (1) est accélérée par un deuxième extracteur de fibre (8) disposé avant la tête d'injection (3) et que la vitesse de convoyage d'un premier extracteur de fibre (5) disposé dans le sens de mouvement de la fibre (1) avant le deuxième extracteur de fibre (8) est commandée en fonction de la longueur de la fibre (1) qui est présente dans un accumulateur de fibre (6) disposé entre le premier (5) et le deuxième (8) extracteurs de fibre (8).

6. Procédé selon la revendication 5, **caractérisé en ce que** le deuxième extracteur de fibre (8) est désactivé après l'atteinte d'une première vitesse prédéfinie de la fibre (1).

7. Procédé selon la revendication 6, **caractérisé en ce que** le premier extracteur de fibre (5) est désactivé après l'atteinte d'une deuxième vitesse prédéfinie de la fibre (1).

8. Procédé selon la revendication 5, **caractérisé en ce que** le premier et le deuxième extracteurs de fibre (5, 8) sont désactivés après l'atteinte d'une vitesse prédéfinie de la fibre (1).

9. Procédé selon la revendication 7 ou 8, **caractérisé en ce que** l'accumulateur de fibre (6) est désactivé en même temps que le premier extracteur de fibre (5).

10. Dispositif d'introduction ou de réacheminement d'une nouvelle fibre (1) ou similaire dans une tête d'injection (3) servant à revêtir ou enrober la fibre (1), comportant un dispositif d'acheminement (10, 10') pour la fibre (1) dans la tête d'injection (3), **caractérisé en ce que** le dispositif d'acheminement (10') peut être positionné près de la première fibre (1) en train de rentrer dans la tête d'injection (3) et qu'il est prévu un entraînement qui permet de positionner le dispositif d'acheminement (10, 10') avant la tête d'injection (3).

11. Dispositif selon la revendication 10, **caractérisé en ce qu'**un premier dispositif d'acheminement (10) est prévu pour la première fibre et un deuxième dispositif d'acheminement (10') pour une nouvelle fibre (1) et que le deuxième dispositif d'acheminement (10') est disposé près du premier dispositif d'acheminement (10).

12. Dispositif selon la revendication 11, **caractérisé en ce que** chaque dispositif d'acheminement (10, 10') présente son propre entraînement.

13. Dispositif selon la revendication 11, **caractérisé en ce que** les deux dispositifs d'acheminement (10, 10') présentent un entraînement commun.

14. Dispositif selon la revendication 12 ou 13, **caractérisé en ce que** les deux dispositifs d'acheminement (10, 10') sont montés sur un châssis (11) qui peut être déplacé par l'entraînement à angle droit par rapport au dispositif d'introduction de la fibre (1, 1') dans la tête d'injection (3).

15. Dispositif selon une des revendications 10 à 14, **caractérisé en ce que** le(s) dispositif(s) d'acheminement (10, 10') présente(nt) un premier (5, 5') et un deuxième (8, 8') extracteurs de fibre et un accumulateur de fibre (6, 6') disposé entre eux.

16. Dispositif selon une des revendications 10 à 15, **caractérisé en ce que** le(s) dispositif(s) d'acheminement (10, 10') présente(nt) côté sortie un tube de guidage (9, 9') qui peut être positionné avant une entrée (15) de la tête d'injection (3).

17. Dispositif selon la revendication 16, **caractérisé en ce que** le tube de guidage (9, 9') peut être déplacé dans le sens d'introduction de la fibre (1, 1') dans la tête d'injection (3).
